# EUROPÄISCHE PATENTSCHRIFT

(11) **EP 3 315 395 B1**
(45) Veröffentlichungstag und Bekanntmachung des Hinweises auf die Patenterteilung: **14.08.2019**
(21) Anmeldenummer: 17195452.2
(22) Anmeldetag: 09.10.2017
(51) Int. Cl.: B62M 6/55, B62M 3/00

(54) **ANTRIEBSEINRICHTUNG FÜR EIN ELEKTROMOTORISCH UND MIT MUSKELKRAFT HYBRID BETRIEBENES ELEKTROFAHRRAD**
DRIVE DEVICE FOR A HYBRID ELECTRIC BICYCLE POWERED BY HUMAN STRENGTH AND AN ELECTRIC MOTOR
DISPOSITIF D'ENTRAÎNEMENT POUR UN MOTEUR ÉLECTRIQUE ET BICYCLETTE ÉLECTRIQUE POURVUE D'ENTRAÎNEMENT HYBRIDE PROPULSÉ PAR FORCE MUSCULAIRE

(30) Priorität: 27.10.2016 DE 102016120544
(43) Veröffentlichungstag der Anmeldung: 02.05.2018
(73) Patentinhaber: Amprio GmbH, 41460 Neuss (DE)
(72) Erfinder: GREVEN, Dietmar, 41541 Dormagen (DE); KRILL, Thorsten, 75050 Gemmingen (DE); BAUMANN, Alexander, 73760 Ostfildern (DE)
(74) Vertreter: Patentanwälte ter Smitten Eberlein-Van Hoof Rütten Partnerschaftsgesellschaft mbB

(56) Entgegenhaltungen:
- US-B1- 6 196 347

## Beschreibung

Die Erfindung betrifft eine Antriebseinrichtung für ein elektromotorisch und mit Muskelkraft hybrid betriebenes Elektrofahrrad.

Außerdem betrifft die Erfindung ein Verfahren zum Betreiben einer Antriebseinrichtung für ein elektromotorisch und mit Muskelkraft hybrid betriebenes Elektrofahrrad.

Elektrofahrräder, die elektromotorisch und mit Muskelkraft hybrid betrieben werden, werden als Pedelecs oder die E-Bikes bezeichnet. Der Unterschied zwischen Pedelecs und E-Bikes besteht darin, dass bei Pedelecs die Antriebseinrichtung lediglich unterstützend und in Abhängigkeit von dem vom Fahrer eingebrachten Fahrerdrehmoment wirkt, wohingehend bei E-Bikes die Antriebseinrichtung unabhängig von dem vom Fahrer eingebrachten Fahrerdrehmoment wirkt. So ist bei Pedelecs eine Tretbewegung des Fahrers zwingend erforderlich, damit die Antriebseinrichtung aktiv ist.

Aus der DE 20 2014 103 462 U2 ist eine typische Antriebseinrichtung eines Pedelec bekannt. Die Antriebseinrichtung weist ein Antriebsgehäuse auf, in dem eine Tretlagerwelle drehbar gelagert ist, wobei an einem Ende der Tretlagerwelle eine erste Tretkurbel und am entgegengesetzten Ende eine zweite Tretkurbel drehfest angeordnet sind. Die Tretlagerwelle ist über einen Fahrerfreilauf mit einer im Antriebsgehäuse gelagerten Hohlwelle verbunden, wobei die Hohlwelle drehfest mit einem Kettenblatt verbunden ist. Die Hohlwelle ist außerdem über einen Motorfreilauf unmittelbar mit einer durch einen Elektromotor angetriebenen Riemenscheibe verbunden. Über das Kettenblatt wird die Summe aus dem Fahrerdrehmoment und dem durch die Antriebseinrichtung erzeugten Drehmoment über eine Kette und beispielsweise eine Ritzelkassette an das Hinterrad des Fahrrades übertragen.

Aus dem Dokument US6196347, welches als nächstliegender Stand der Technik angesehen wird, ist eine Anordnung einer Antriebseinrichtung mit den Merkmalen der Präambel des Anspruchs 1 bekannt.

Die Unterstützung der Antriebseinrichtung ist von dem durch den Fahrer während der Tretbewegung erzeugten Fahrerdrehmoment und von einem Unterstützungsgrad abhängig. Die unterschiedlichen Unterstützungsgrade werden üblicherweise von den Herstellern derartiger Antriebseinrichtungen vorgegeben. Das durch den Fahrer während der Tretbewegung erzeugte Fahrerdrehmoment wird über einen Drehmomentsensor ermittelt, der üblicherweise mit der Tretlagerwelle zusammenwirkt und beispielsweise die Torsion der Tretlagerwelle und daraus das Fahrerdrehmoment ermittelt.

Nachteilig an einer derartigen Ausführung ist, dass lediglich die Höhe des Fahrerdrehmoments ermittelt wird, wobei unbekannt ist, ob das Fahrerdrehmoment durch die erste Tretkurbel und/oder durch die zweite Tretkurbel in die Tretlagerwelle eingeleitet wird.

Der Erfindung liegt daher die Aufgabe zugrunde, den oben genannten Nachteil zu vermeiden.

Diese Aufgabe wird durch eine Antriebseinrichtung mit den Merkmalen des Hauptanspruchs gelöst.

Die Antriebseinrichtung für ein elektromotorisch und mit Muskelkraft hybrid betriebenes Elektrofahrrad weist ein Antriebsgehäuse auf, wobei das Antriebsgehäuse über eine an einem Fahrradrahmen ausgebildete Schnittstelle mit dem Fahrradrahmen starr verbunden ist oder einstückig mit dem Fahrradrahmen ausgeführt ist.

In dem Antriebsgehäuse ist eine Tretlagerwelle, üblicherweise über Wälzlager, drehbar gelagert. Die Tretlagerwelle weist an einem ersten Längs-Ende eine erste Tretkurbel und an dem entgegengesetzten Längs-Ende eine zweite Tretkurbel auf, wobei die Tretkurbeln zueinander um 180° versetzt ausgerichtet sind.

Die Tretlagerwelle ist über einen Fahrerfreilauf mit einer im Antriebsgehäuse drehbar gelagerten Summierhohlwelle verbunden, wobei die Summierhohlwelle mit einem Kettenblatt drehfest verbunden ist. An das Kettenblatt greift eine Kette an, die das Kettenblatt mit einem am Hinterrad drehfest angeordneten Kettenrad verbindet.

Durch den Fahrerfreilauf erfolgt eine drehrichtungsabhängige Drehmomentübertragung von der Tretlagerwelle zur Summierhohlwelle, so dass der Fahrer das Treten während der Fahrt auch unterbrechen kann oder die Tretkurbeln auch rückwärts treten kann.

Die Summierhohlwelle ist außerdem über einen Motorfreilauf unmittelbar mit einem Zahnrad verbunden, welches von einem Elektromotor angetrieben wird. Die Drehmomentübertragung zwischen dem Zahnrad und der Summierhohlwelle erfolgt ebenfalls nur in eine Drehrichtung. Die drehrichtungsabhängige Verbindung des Zahnrades mit der Summierhohlwelle über den Motorfreilauf ermöglicht eine Entkopplung des Zahnrades von der Summierhohlwelle, wenn die Drehzahl der Summierhohlwelle höher ist als die Drehzahl des Zahnrades. Dies ist der Fall, wenn der Elektromotor ausgeschaltet ist. Der Elektromotor kann manuell durch den Fahrer ausgeschaltet werden oder durch die Motorsteuerung ausgeschaltet werden, wenn beispielsweise die Geschwindigkeit des Pedelecs die zulässige Unterstützungs-Geschwindigkeit, üblicherweise 25 km/h, übersteigt.

Die Messung des Fahrerdrehmoments erfolgt über eine Sensoranordnung, die einen ersten Drehmomentsensor und einen zweiten Drehmomentsensor aufweist. Die Drehmomentsensoren sind starr im Antriebsgehäuse angeordnet, wobei der erste Drehmomentsensor mit der Tretkurbelwelle zusammenwirkt und der zweite Drehmomentsensor mit der Summierhohlwelle zusammenwirkt. Der erste Drehmomentsensor misst die Torsion der Tretkurbelwelle und der zweite Drehmomentsensor die Torsion der Summierhohlwelle, wobei die Messwerte der Drehmomentsensoren miteinander verglichen werden und daraus geschlossen wird, ob das Fahrerdrehmoment durch die erste Tretkurbel und/oder durch die zweite Tretkurbel in die Antriebseinrichtung eingeleitet wird.

Dadurch werden das durch die erste Tretkurbel eingeleitete Fahrerdrehmoment und das durch die zweite Tretkurbel eingeleitete Fahrerdrehmoment ermittelt, wodurch die Genauigkeit der Drehmomentmessung erhöht und die Ansteuerung des Elektromotors verbessert werden. So können bestimmte Fahrzustände des Fahrers, beispielsweise der Wiegetritt, erkannt werden und der Elektromotor entsprechend angesteuert werden. Auf diese Weise können Entregelungen bzw. ein Aufschaukeln der Regelung verhindert werden. Die Regelungsqualität kann auf diese Weise erheblich verbessert werden.

Vorzugsweise ist der erste Drehmomentsensor kinematisch zwischen der ersten Tretkurbel und dem Fahrerfreilauf angeordnet. Durch eine derartige Anordnung des ersten Drehmomentsensors wird durch diesen ausschließlich das durch die erste Tretkurbel in die Tretlagerwelle eingeleitete Fahrerdrehmoment gemessen, wobei eine Torsion der Tretlagerwelle hauptsächlich zwischen der ersten Tretkurbel und dem Fahrerfreilauf erfolgt, wenn das Fahrerdrehmoment durch die erste Tretkurbel eingeleitet wird.

In einer bevorzugten Ausgestaltung ist der zweite Drehmomentsensor kinematisch zwischen dem Fahrerfreilauf und dem Kettenblatt angeordnet, wodurch das durch die zweite Tretkurbel in die Tretlagerwelle eingeleitete Fahrerdrehmoment ermittelt wird. Dieses wird über den Fahrerfreilauf an die Summierhohlwelle übertragen. Am entgegengesetzten Ende der Summierhohlwelle wirkt am Kettenblatt die Gegenkraft, so dass die Summierhohlwelle tordiert wird. Durch einen Abgleich der Messwerte des ersten Drehmomentsensors und des zweiten Drehmomentsensors wird, beispielsweise durch Differenzbildung, das Fahrerdrehmoment ermittelt, welches durch die zweite Tretkurbel eingeleitet wird.

Vorzugsweise ist der Motorfreilauf kinematisch zwischen dem zweiten Drehmomentsensor und dem Kettenblatt angeordnet, wodurch die Drehmomentsensoren die Torsion, die durch das vom Elektromotor ausgehende über das Zahnrad auf die Summierhohlwelle übertragene Drehmoment verursacht wird, nicht erfassen und dadurch die Drehmomentmessungen der Drehmomentsensoren nicht verfälscht werden. Auf diese Weise werden Tretkurbel-selektive Drehmomentmessungen durch die Drehmomentsensoren vereinfacht.

In einer vorteilhaften Ausgestaltung ist mindestens einer der Drehmomentsensoren ein Magnetfeldsensor, wobei die Tretkurbelwelle und/oder die Summierhohlwelle jeweils einen korrespondierenden magnetisierten Bereich aufweisen. Die Tretkurbelwelle und/oder die Summierhohlwelle ist/sind in Umfangsrichtung magnetisiert, wobei das Magnetfeld zirkular im Körper der Tretkurbelwelle und/oder der Summierhohlwelle liegt und ohne Torsion der Tretkurbelwelle und/oder der Summierhohlwelle nicht oder nur geringfügig aus der Oberfläche der Tretkurbelwelle und/oder der Summierhohlwelle austritt. Bei einer aus einer Antriebs-Belastung der Tretkurbelwelle und/oder der Summierhohlwelle in Umfangsrichtung resultierenden Torsion ergibt sich ein Magnetfeld außerhalb der Tretkurbelwelle und/oder der Summierhohlwelle, deren Größe von der Stärke der Torsion abhängt. Der Magnetfeldsensor misst dieses Magnetfeld außerhalb der der Tretkurbelwelle und/oder der Summierhohlwelle, woraus das durch die Tretkurbeln in die Tretlagerwelle eingeleitete Fahrerdrehmoment bestimmt wird.

In einer bevorzugten Ausgestaltung sind beide Drehmomentsensoren fest an einer einzigen im Antriebsgehäuse fest angeordneten Sensoraufnahmehülse angeordnet, wodurch die Montage der Drehmomentsensoren im Antriebsgehäuse erleichtert wird. Vorzugsweise umgibt die Sensoraufnahmehülse die Tretkurbel und die Summierhohlwelle außen.

Vorzugsweise ist mindestens einer der Freiläufe ein Klemmkörperfreilauf. Mit einem Klemmkörperfreilauf sind im Vergleich zu Freiläufen mit federbelasteten Sperrklinken oder federbelasteten Klemmrollen höhere Drehmomente übertragbar. Außerdem kann ein Klemmkörperfreilauf einfach mit einem Wälzlager kombiniert werden.

In einer bevorzugten Ausgestaltung ist das durch den Elektromotor angetriebene Zahnrad als Abtrieb eines zweistufigen Getriebes ausgebildet. Der Elektromotor weist üblicherweise eine im Vergleich zur Tretkurbelwelle bzw. zur Summierhohlwelle hohe Drehzahl auf. Um das Fahrerdrehmoment und das Motordrehmoment an der Summierhohlwelle summieren zu können, muss die Drehzahl des Elektromotors auf die Drehzahl des Fahrers untersetzt werden. Dies erfolgt über ein zweistufiges Getriebe, wobei das Zahnrad den Abtrieb des zweistufigen Getriebes bildet.

Vorzugsweise sind der erste Drehmomentsensor, der zweite Drehmomentsensor und der Elektromotor mit einer Steuervorrichtung verbunden, wobei in der Steuervorrichtung die Signale der Drehmomentsensoren ausgewertet werden und basierend auf den ausgewerteten Signalen der Elektromotor angesteuert wird. Dabei wird unter anderem der eingestellte Unterstützungsgrad berücksichtigt.

Die oben genannte Aufgabe wird weiterhin gelöst durch ein Verfahren zum Betreiben einer Antriebseinrichtung für ein Elektrofahrrad mit den Merkmalen der Ansprüche 1-10. Dabei wird über den ersten Drehmomentsensor ein Torsionsmoment in der Tretkurbelwelle ermittelt, wird über den zweiten Drehmomentsensor ein Torsionsmoment in der Summierhohlwelle ermittelt, werden die ermittelten Torsionsmomente miteinander abgeglichen und wird daraus schließlich ein Parameter zum Ansteuern des Elektromotors generiert. Mit einem derartigen Verfahren wird das Fahrerdrehmoment in Abhängigkeit von den einzelnen Tretkurbeln auf eine einfache Weise ermittelt, und wird basierend darauf, der Elektromotor angesteuert. Durch die Messung des Fahrerdrehmoments in Abhängigkeit von den einzelnen Tretkurbeln wird die Genauigkeit der Messung des Fahrerdrehmoments erhöht und wird die Ansteuerung des Elektromotors verbessert.

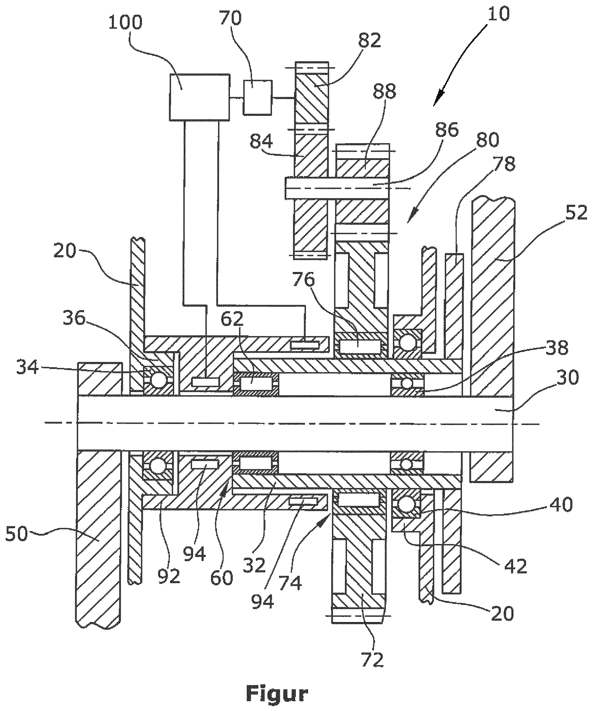

Die Figur zeigt eine Antriebseinrichtung in geschnittener Darstellung.

Die Figur zeigt eine Antriebseinrichtung 10 mit einem Antriebsgehäuse 20, welches über eine in der Figur nicht dargestellte Schnittstelle an einem ebenfalls nicht dargestellten Pedelec-Fahrradrahmen starr angeordnet ist. Im Antriebsgehäuse 20 sind eine Tretkurbelwelle 30 und eine Summierhohlwelle 32 angeordnet, wobei an einem ersten Längs-Ende der Tretkurbelwelle 30 eine erste Tretkurbel 50 und an dem entgegengesetzten Längs-Ende eine zweite Tretkurbel 52 fest angeordnet sind.

Die Tretkurbelwelle 30 ist über ein erstes Wälzlager 34 und ein zweites Wälzlager 38 im Antriebsgehäuse 20 unmittelbar oder mittelbar drehbar gelagert. Das erste Wälzlager 34 ist zwischen einem am Antriebsgehäuse 20 ausgebildeten ringförmigen Vorsprung 36 und der Tretkurbelwelle 30 angeordnet. Das zweite Wälzlager 38 ist zwischen einer Innenumfangsfläche der Summierhohlwelle 32 und der Tretlagerwelle 30 angeordnet. Die Summierhohlwelle 32 ist über ein drittes Wälzlager 40 an einem am Antriebsgehäuse 20 ausgebildeten Vorsprung 42 drehbar gelagert.

Die Tretkurbelwelle 30 und die Summierhohlwelle 32 sind über einen Fahrerfreilauf 60 kinematisch miteinander verbunden, wobei über den Fahrerfreilauf 60 nur Drehmomente in einer Drehrichtung der Tretkurbelwelle 30 an die Summierhohlwelle 32 übertragen werden. Der Fahrerfreilauf 60 ist ein Klemmkörperfreilauf. Bei einer Drehbewegung der Tretkurbelwelle 30 in die drehmomentübertagende Drehrichtung verklemmen sich die Klemmkörper 62 zwischen der Tretkurbelwelle 30 und der Summierhohlwelle 32 und bilden auf diese Weise eine reibschlüssige Verbindung zwischen der Tretkurbelwelle 30 und der Summierhohlwelle 32. Bei einer Drehbewegung der Tretkurbelwelle 30 in eine entgegengesetzte Drehrichtung verklemmen sich die Klemmkörper 62 zwischen der Tretkurbelwelle 30 und der Summierhohlwelle 32 nicht, so dass keine Drehmomentübertragung zwischen der Tretkurbelwelle 30 und der Summierhohlwelle 32 erfolgt.

Die Summierhohlwelle 32 ist zusätzlich mit einem von einem Elektromotor 70 angetriebenen Zahnrad 72 verbunden. Die Verbindung zwischen der Summierhohlwelle 32 und dem Zahnrad 72 erfolgt über einen Motorfreilauf 74, welcher ebenfalls als Klemmkörperfreilauf mit Klemmkörpern 76 ausgeführt ist. Das Zahnrad 72 ist der Abtrieb eines zweistufigen Getriebes 80, wobei das Getriebe 80 sich aus dem Zahnrad 72, einer Welle 86, auf der ein in das Zahnrad 72 eingreifendes Zahnrad 88 und ein Zahnrad 84 drehfest angeordnet sind, und einem in das Zahnrad 84 eingreifenden Motorritzel 82 zusammensetzt, wobei das Motorritzel 82 von dem im Antriebsgehäuse 20 starr angeordneten Elektromotor 70 angetrieben wird. Das zweistufige Getriebe 80 weist eine Untersetzung auf, die die hohe Motordrehzahl des Elektromotors 70 an die Drehzahl des Fahrers, üblicherweise 60-120 Umdrehungen pro Minute, anpasst.

Im Betrieb werden das Fahrerdrehmoment und das Motordrehmoment auf die Summierhohlwelle 32 übertragen, wobei das resultierende Summen-Drehmoment an das mit der Summierhohlwelle 32 drehfest verbundene Kettenblatt 78 übertragen wird. Das Kettenblatt 78 ist über eine nicht dargestellte Kette beispielsweise mit einer mit dem Hinterrad des Pedelecs verbundenen Ritzelkasette verbunden.

Bei einem Pedelec ist die Antriebsunterstützung durch den Elektromotor 70 von dem durch den Fahrer erzeugten Fahrerdrehmoment zum Antreiben des Pedelecs abhängig. Um das Fahrerdrehmoment zu messen, ist im Antriebsgehäuse 20 eine Sensoraufnahmehülse 92 mit einer Sensoranordnung 90 fest angeordnet. Die Sensoranordnung 90 weist einen ersten Drehmomentsensor 94 und einen zweiten Drehmomentsensor 96 auf. Der erste Drehmomentsensor 94 wirkt mit der Tretkurbelwelle 30 zusammen, wobei der erste Drehmomentsensor 94 ein Magnetfeldsensor ist und die Tretkurbelwelle 30 im Bereich des ersten Drehmomentsensors 94 magnetisiert ist. Der zweite Drehmomentsensor 96 wirkt mit der Summierhohlwelle 32 zusammen, wobei der zweite Drehmomentsensor 96 ein Magnetfeldsensor ist und die Summierhohlwelle 32 im Bereich des zweiten Drehmomentsensors 96 magnetisiert ist.

Die Magnetfelder der Tretkurbelwelle 30 und der Summierhohlwelle 32 weisen im unbelasteten Zustand im Wesentlichen nur ein Magnetfeld im Inneren der Tretkurbelwelle 30 bzw. der Summierhohlwelle 32 auf, wobei das Magnetfeld ohne Torsion der Tretkurbelwelle 30 bzw. der Summierhohlwelle 32 nicht oder nur geringfügig aus der Oberfläche der Tretkurbelwelle 30 bzw. der Summierhohlwelle 32 austritt. Bei einer Torsion der Tretkurbelwelle 30 bzw. der Summierhohlwelle ergeben sich Magnetfelder außerhalb der Tretkurbelwelle 30 bzw. der Summierhohlwelle 32, deren Größe jeweils von der Höhe der Torsion abhängt. Die Magnetfeldsensoren 94, 96 messen die bei der Torsion der Tretkurbelwelle 30 bzw. der Summierhohlwelle 32 entstehenden Magnetfelder außerhalb der Tretkurbelwelle 30 bzw. der Summierhohlwelle 32, woraus das an der Tretkurbelwelle 30 bzw. der Summierhohlwelle 32 anliegende Drehmoment bestimmt wird.

Der Drehmomentsensor 94 ist kinematisch und räumlich zwischen der ersten Tretkurbel 50 und dem Fahrerfreilauf 60 angeordnet. Der zweite Drehmomentsensor 96 ist kinematisch und räumlich zwischen dem Kettenblatt 78 und dem Fahrerfreilauf 60 angeordnet. Durch eine derartige Anordnung der Drehmomentsensoren 94, 96 kann das durch den Fahrer in die Antriebseinrichtung 10 eingeleitete Fahrerdrehmoment abhängig davon gemessen werden, über welche Tretkurbel 50, 52 das Fahrerdrehmoment eingeleitet wird. Dabei misst der zweite Drehmomentsensor 96 das gesamte Fahrerdrehmoment unabhängig davon, über welche Tretkurbel 50, 52 das Fahrerdrehmoment eingeleitet wird. Der erste Drehmomentsensor 94 misst ausschließlich ein über die erste Tretkurbel 50 eingeleitete Fahrerdrehmoment.

Durch einen Abgleich der Signale der Drehmomentsensoren 94, 96 wird ermittelt, über welche Tretkurbel 50, 52 das Fahrerdrehmoment in die Antriebseinrichtung eingeleitet wird, wobei die Drehmomentsensoren 94, 96 mit einer Steuereinheit 100 verbunden sind und der Abgleich durch die Steuereinheit 100 erfolgt. Außerdem ist die Steuereinheit 100 mit dem Elektromotor 70 verbunden. Die Steuereinheit 100 wertet die Signale der Drehmomentsensoren 94, 96 aus, ermittelt aus der Auswertung der Signale der Drehmomentsensoren 94, 96 die Höhe der Unterstützung des Elektromotor 70 und steuert den Elektromotor 70 entsprechend an.

Es sollte deutlich sein, dass auch andere konstruktive Ausführungsformen des Antriebssystems im Vergleich zur beschriebenen Ausführungsform möglich sind, ohne den Schutzbereich des Hauptanspruchs zu verlassen.

## Patentansprüche

1. Antriebseinrichtung (10) für ein elektromotorisch und mit Muskelkraft hybrid betriebenes Elektrofahrrad, mit
einem Antriebsgehäuse (20), welches an einem Fahrradrahmen fest angeordnet ist,
einer im Antriebsgehäuse (20) drehbar gelagerte Tretkurbelwelle (30), wobei an den beiden Enden der Tretkurbelwelle (30) jeweils eine Tretkurbel (50, 52) drehfest angeordnet ist,
einer im Antriebsgehäuse (20) drehbar gelagerten Summierhohlwelle (32), wobei die Summierhohlwelle (32) über einen Fahrerfreilauf (60) mit der Tretkurbelwelle (30) und über einen Motorfreilauf (74) mit einem durch einen Elektromotor (70) angetriebenen Zahnrad (72) unmittelbar verbunden ist, und wobei die Summierhohlwelle (32) mit einem Kettenblatt (78) drehfest verbunden ist, und
einer im Antriebsgehäuse (20) fest angeordneten Sensoranordnung (90), wobei die Sensoranordnung (90) einen ersten Drehmomentsensor (94) aufweist, der mit der Tretkurbelwelle (30) zusammenwirkt, **dadurch gekennzeichnet, dass**
die Sensoranordnung (90) einen zweiten Drehmomentsensor (96) aufweist, der mit der Summierhohlwelle (32) zusammenwirkt.

2. Antriebseinrichtung (10) für ein elektromotorisch und mit Muskelkraft hybrid betriebenes Elektrofahrrad nach Anspruch 1,
**dadurch gekennzeichnet, dass**
der erste Drehmomentsensor (94) zwischen einer ersten Tretkurbel (50) und dem Fahrerfeilauf (60) angeordnet ist.

3. Antriebseinrichtung (10) für ein elektromotorisch und mit Muskelkraft hybrid betriebenes Elektrofahrrad nach Anspruch 1 oder 2,
**dadurch gekennzeichnet, dass**
der zweite Drehmomentsensor (96) zwischen dem Fahrerfreilauf (60) und dem Kettenblatt (78) angeordnet ist.

4. Antriebseinrichtung (10) für ein elektromotorisch und mit Muskelkraft hybrid betriebenes Elektrofahrrad nach einem der vorhergehenden Ansprüche,
**dadurch gekennzeichnet, dass**
der Motorfreilauf (74) zwischen dem zweiten Drehmomentsensor (96) und dem Kettenblatt (78) angeordnet ist.

5. Antriebseinrichtung (10) für ein elektromotorisch und mit Muskelkraft hybrid betriebenes Elektrofahrrad nach einem der vorhergehenden Ansprüche,
**dadurch gekennzeichnet, dass**
mindestens einer der Drehmomentsensoren (94, 96) ein Magnetfeldsensor ist und die Tretkurbelwelle (30) und/oder die Summierhohlwelle (32) jeweils einen korrespondierenden magnetisierten Bereich aufweisen.

6. Antriebseinrichtung (10) für ein elektromotorisch und mit Muskelkraft hybrid betriebenes Elektrofahrrad nach einem der vorhergehenden Ansprüche,
**dadurch gekennzeichnet, dass**
beide Drehmomentsensoren (94, 96) fest an einer einzigen im Antriebsgehäuse (20) fest angeordneten Sensoraufnahmehülse (92) angeordnet sind.

7. Antriebseinrichtung (10) für ein elektromotorisch und mit Muskelkraft hybrid betriebenes Elektrofahrrad nach Anspruch 6,
**dadurch gekennzeichnet, dass**
die Sensoraufnahmehülse (92) die Tretkurbelwelle (30) und die Summierhohlwelle (32) außen umgibt.

8. Antriebseinrichtung (10) für ein elektromotorisch und mit Muskelkraft hybrid betriebenes Elektrofahrrad nach einem der vorhergehenden Ansprüche,
**dadurch gekennzeichnet, dass**
mindestens einer der Freiläufe (60, 74) ein Klemmkörperfreilauf ist.

9. Antriebseinrichtung (10) für ein elektromotorisch und mit Muskelkraft hybrid betriebenes Elektrofahrrad nach einem der vorhergehenden Ansprüche,
**dadurch gekennzeichnet, dass**
das durch den Elektromotor (70) angetriebene Zahnrad (72) als Abtrieb eines zweistufigen Getriebes (80) ausgebildet ist.

10. Antriebseinrichtung (10) für ein elektromotorisch und mit Muskelkraft hybrid betriebenes Elektrofahrrad nach einem der vorhergehenden Ansprüche,
**dadurch gekennzeichnet, dass**
der erste Drehmomentsensor (94), der zweite Drehmomentsensor (96) und der Elektromotor (70) mit einer Steuereinrichtung (100) verbunden sind.

11. Verfahren zum Betreiben einer Antriebseinrichtung mit den Merkmalen einer der vorhergehenden Ansprüche,
**dadurch gekennzeichnet, dass**
der erste Drehmomentsensor (94) ein Torsionsmoment in der Tretkurbelwelle (30) ermittelt,
der zweite Drehmomentsensor (96) ein Torsionsmoment der Summierhohlwelle (32) ermittelt,
die ermittelten Torsionsmomente in der Steuereinheit (100) miteinander verglichen werden, und
hieraus ein Paramater zum Ansteuern des Elektromotors (70) generiert wird.

## Claims

1. Drive device (10) for a hybrid electric bicycle operated electromotively and by muscular force comprising
a drive housing (20) rigidly connected to a bicycle frame,
a bottom bracket shaft (30) rotatably arranged in the drive housing (20), wherein a pedal crank (50, 54) is respectively arranged at the two ends of the bottom bracket shaft (30) for rotation therewith,
a summing hollow shaft (32) rotatably supported in the drive housing (20), wherein the summing hollow shaft (32) is directly connected to the bottom bracket shaft (30) via a cyclist's freewheel (60) and, via a motor freewheel (74), to a gear (72) driven by an electric motor (70), and wherein the summing hollow shaft (32) is connected to a chain wheel (78) for rotation therewith, and
a sensor assembly (90) fixedly arranged in the drive housing (20), wherein the sensor assembly (90) comprises a first torque sensor (94) that cooperates with the bottom bracket shaft (30),
**characterized in that**
the sensor assembly (90) comprises a second torque sensor (96) that cooperates with the summing hollow shaft (32).

2. Drive device (10) for a hybrid electric bicycle operated electromotively and by muscular force of claim 1, **characterized in that** the first torque sensor (94) is arranged between a first pedal crank (50) and the cyclist's freewheel (60).

3. Drive device (10) for a hybrid electric bicycle operated electromotively and by muscular force of claim 1 or 2, **characterized in that** the second torque sensor (96) is arranged between the cyclist's freewheel (60) and the chain wheel (78).

4. Drive device (10) for a hybrid electric bicycle operated electromotively and by muscular force of one of the preceding claims, **characterized in that** the motor freewheel (74) is arranged between the second torque sensor (96) and the chain wheel (78).

5. Drive device (10) for a hybrid electric bicycle operated electromotively and by muscular force of one of the preceding claims, **characterized in that** at least one of the torque sensors (94, 96) is a magnetic field sensor and the bottom bracket shaft (30) and/or the summing hollow shaft (32) each have a corresponding magnetized region.

6. Drive device (10) for a hybrid electric bicycle operated electromotively and by muscular force of one of the preceding claims, **characterized in that** both torque sensors (94, 96) are fixedly arranged at a single sensor receiving sleeve (92) fixedly arranged in the drive housing (20).

7. Drive device (10) for a hybrid electric bicycle operated electromotively and by muscular force of claim 6, **characterized in that** the sensor receiving sleeve (92) surrounds the bottom bracket shaft (30) and the summing hollow shaft (32) on the outside.

8. Drive device (10) for a hybrid electric bicycle operated electromotively and by muscular force of one of the preceding claims, **characterized in that** at least one of the freewheels (60, 74) is a sprag freewheel.

9. Drive device (10) for a hybrid electric bicycle operated electromotively and by muscular force of one of the preceding claims, **characterized in that** the gear (72) driven by the electric motor (70) is designed as the output of a two-stage transmission (80).

10. Drive device (10) for a hybrid electric bicycle operated electromotively and by muscular force of one of the preceding claims, **characterized in that** the first torque sensor (94), the second torque sensor (96) and the electric motor (70) are connected to a control device (100).

11. Method for operating a drive device having the features of one of the preceding claims, **characterized in that**
a torsional moment in the bottom bracket shaft (30) is determined by the first torque sensor (94),
a torsional moment in the summing hollow shaft (32) is determined by the second torque sensor (96),
the determined torsional moments are compared to each other in the control unit (100), and
a parameter is generated therefrom for controlling the electric motor (70).

## Revendications

1. Dispositif d'entrainement (10) pour un vélo électrique hybride entrainé par moteur électrique et à force musculaire, comprenant
un carter d'entrainement (20) monté fixement sur un cadre de bicyclette,
un arbre de manivelle de pédalier (30) supporté de manière rotative dans le carter d'entrainement (30), une manivelle de pédalier (50, 52) étant disposée à chacune des deux extrémités de l'arbre de manivelle de pédalier (30) de manière solidaire en rotation,
un arbre creux totalisateur (32) disposé de manière rotative dans le carter d'entrainement (30), l'arbre creux totalisateur (32) étant relié directement à l'arbre de manivelle de pédalier (30) par une roue libre de cycliste (60) et, par une roue libre du moteur (74), à une roue dentée (72) entrainée par un électromoteur (70), et l'arbre creux totalisateur (32) étant relié à un plateau (78) de manière solidaire en rotation, et
un ensemble de capteur (90) disposé de manière fixe dans le carter d'entrainement (20), ledit ensemble de capteur (90) comportant un premier capteur de couple (94) coopérant avec l'arbre de manivelle de pédalier (30),
**caractérisé en ce que**
l'ensemble de capteur (90) comporte un deuxième capteur de couple (96) coopérant avec l'arbre creux totalisateur (32).

2. Dispositif d'entrainement (10) pour un vélo électrique hybride entrainé par moteur électrique et à force musculaire selon la revendication 1, **caractérisé en ce que** le premier capteur de couple (94) est disposé entre une première manivelle de pédalier (50) et ladite roue libre de cycliste (60).

3. Dispositif d'entrainement (10) pour un vélo électrique hybride entrainé par moteur électrique et à force musculaire selon la revendication 1 ou 2, **caractérisé en ce que** le deuxième capteur de couple (96) est disposé entre ladite roue libre de cycliste (60) et le plateau (78).

4. Dispositif d'entrainement (10) pour un vélo électrique hybride entrainé par moteur électrique et à force musculaire selon l'une quelconque des revendications précédentes, **caractérisé en ce que** la roue libre du moteur (74) est disposée entre le deuxième capteur de couple (96) et le plateau (78).

5. Dispositif d'entrainement (10) pour un vélo électrique hybride entrainé par moteur électrique et à force musculaire selon l'une quelconque des revendications précédentes, **caractérisé en ce qu'**au moins un des capteurs de couple (94, 96) est un capteur de champs magnétique et l'arbre de manivelle de pédalier (30) et/ou l'arbre creux totalisateur (32) chacun comporte une région magnétisée correspondante.

6. Dispositif d'entrainement (10) pour un vélo électrique hybride entrainé par moteur électrique et à force musculaire selon l'une quelconque des revendications précédentes, **caractérisé en ce que** les deux capteurs de couple (94, 96) sont disposés de manière fixe sur une seule douille de logement des capteurs (92) disposée de manière fixe dans un seul carter d'entrainement (20).

7. Dispositif d'entrainement (10) pour un vélo électrique hybride entrainé par moteur électrique et à force musculaire selon la revendication 6, **caractérisé en ce que** la douille de logement des capteurs (92) entoure l'arbre creux totalisateur (32) sur l'extérieur.

8. Dispositif d'entrainement (10) pour un vélo électrique hybride entrainé par moteur électrique et à force musculaire selon l'une quelconque des revendications précédentes, **caractérisé en ce que** au moins une des roues libres (60, 74) est une roue libre à corps de serrage.

9. Dispositif d'entrainement (10) pour un vélo électrique hybride entrainé par moteur électrique et à force musculaire selon l'une quelconque des revendications précédentes, **caractérisé en ce que** la roue dentée (72) entrainée par ledit électromoteur (70) est configurée comme la sortie d'une transmission à deux étages (80).

10. Dispositif d'entrainement (10) pour un vélo électrique hybride entrainé par moteur électrique et à force musculaire selon l'une quelconque des revendications précédentes, **caractérisé en ce que** le premier capteur de couple (94), le deuxième capteur de couple (96) et ledit électromoteur (70) sont reliés à un dispositif de commande (100).

11. Procédé d'opération d'un dispositif d'entrainement avec les caractéristiques selon l'une quelconque des revendications précédentes, **caractérisé en ce que** le premier capteur de couple (94) détermine un moment de torsion dans l'arbre de manivelle de pédalier (30), le deuxième capteur de couple (96) détermine un moment de torsion de l'arbre creux totalisateur (32), les moments de torsion déterminés étant comparé l'un à l'autre dans le dispositif de commande (100), et un paramètre en est généré pour commander ledit électromoteur (70).
